# EUROPÄISCHE PATENTSCHRIFT

(11) **EP 4 076 831 B1**
(45) Veröffentlichungstag und Bekanntmachung des Hinweises auf die Patenterteilung: **14.08.2024**
(21) Anmeldenummer: 20799673.7
(22) Anmeldetag: 28.10.2020
(51) Int. Cl.: B23K 26/352, B29C 33/38, B29D 30/06

(54) **3D-DRUCK VON REIFENFORMELEMENTEN**
3D PRINTING OF TYRE MOULD ELEMENTS
IMPRESSION 3D D'ÉLÉMENTS DE MOULE POUR PNEUS

(30) Priorität: 16.12.2019 DE 102019219669
(43) Veröffentlichungstag der Anmeldung: 26.10.2022
(73) Patentinhaber: Continental Reifen Deutschland GmbH, 30175 Hannover (DE)
(72) Erfinder: HOPPE, Nicholas, 30165 Hannover (DE); DZICK, Jürgen, 30165 Hannover (DE)
(74) Vertreter: Continental Corporation
(86) Internationale Anmeldenummer: PCT/EP2020/080226
(87) Internationale Veröffentlichungsnummer: WO 2021/121746

(56) Entgegenhaltungen:
- EP-A2- 1 090 728
- WO-A1-2016/097015
- US-A- 5 431 873
- US-A1- 2009 218 019
- US-A1- 2013 118 660
- US-A1- 2017 080 656
- US-A1- 2017 217 113

## Beschreibung

Die vorliegende Erfindung betrifft ein Reifenformelement zur Verwendung in einer Reifenform sowie ein Verfahren, ein Computerprogramm mit Instruktionen und eine Vorrichtung zum Herstellen eines solchen Reifenformelements mit einer 3D-Druckvorrichtung. Die Erfindung betrifft des Weiteren eine Reifenform mit einem solchen Reifenformelement und einen unter Verwendung des Reifenformelements hergestellten Reifen.

Bei der Herstellung von Reifen werden Reifenformsegmente genutzt, die zu einer Reifenvulkanisierungsform zusammengesetzt werden. Die Reifenformsegmente weisen dabei typischerweise Strukturen auf, die sich später an der Oberfläche des fertigen Reifens wiederfinden. Beispielsweise können die Strukturen technische Informationen vermitteln oder den Hersteller des Reifens und das Reifenmodell angeben.

In diesem Zusammenhang beschreibt US 2018/0200974 A1 ein Formelement, das in einer Form zum Vulkanisieren von Reifen befestigt werden kann. Das Formelement umfasst eine Formfläche, die dazu bestimmt ist, die gesamte oder einen Teil der Außenfläche des Reifens zu bilden. Die Formfläche weist ein Muster auf, das aus einer Vielzahl von vertieften oder vorstehenden Elementen besteht, die als integrale Bestandteile des Formelements ausgebildet sind. Das auf der Form vorhandene Muster ermöglicht es, eine bestimmte Textur auf einem mit der Form vulkanisierten Reifen zu erhalten.

Hochauflösende Oberflächenstrukturen sind mittels konventioneller Fertigung nur durch hohe Fräsaufwände zu erreichen. Hochauflösende Strukturen in Aluminiumformen sind als nicht dauerfest zu bewerten, da der Verschleiß an entsprechenden Strukturen direkt sichtbar wird und die Form somit nicht mehr für die Produktion genutzt werden kann. Ein Nacharbeiten der Strukturen ist im Werk nicht möglich und bei Formherstellern nur bedingt möglich.

Durch das Drucken von Reifenformsegmenten oder das Eingießen oder Einsetzen von mittels 3D-Druck gedruckten Reifenformelementen aus Stahl können hochkomplexe Geometrien in Reifenformen realisiert werden.

Beispielsweise beschreibt DE 10 2004 052 766 A1 eine Reifenvulkanisierform mit mehreren zu einer umfangsmäßig geschlossenen Form zusammenfügbaren Profilsegmenten, welche jeweils einen außenseitigen Grundkörper und innenseitig wenigstens eine profilierte Formfläche aus gesintertem Material aufweisen und mit sich ausgehend von dieser Formfläche durch das j eweilige Profilsegment nach außen erstreckenden Luftableitwegen versehen sind. Die Formfläche kann mittels eines Laserschmelzverfahrens aus einem pulverförmigen sinterfähigen Material aufgebaut werden.

Für den Druckprozess werden dreidimensionale Geometrien durch eine Schichtung von zweidimensionalen Schichten beschrieben. Der damit einhergehende Übersetzungsfehler in Form eines Genauigkeitsverlustes führt zu Stufen, die von einer Orientierung des Bauteils im Bauraum des 3D-Druckers abhängen.

Die sichtbaren Stufeneffekte und andere, in der Auflösung des Druckers und den gewählten Parametern begründete Oberflächendefekte, die insbesondere auf größeren zusammenhängenden Freiformflächen deutlich in Erscheinung treten, sind im sichtbaren Bereich einer Reifenform unerwünscht und müssen durch Nachbearbeitung entfernt werden.

Da die gedruckten Formsegmente oder Formelemente aus Gründen der Stabilität aus Stahl hergestellt werden, gestaltet sich die manuelle Nachbearbeitung zeit- und kostenintensiv. Darüber hinaus ist eine ideale Freiformoberflächenqualität nur schwer zu erreichen, da die Entfernung von ungewünschten Stufen in komplexen Oberflächen einen aufwendigen, individuellen selektiven Materialabtrag erfordert.

Da weder umliegende Bauteilkanten verrundet werden dürfen noch die Maßhaltigkeit der gedruckten Segmente oder Elemente durch die Nachbehandlung verändert werden darf, scheiden nicht selektiv wirkende bekannte Verfahren, wie z.B. Gleitschleifen, oder neuartige Verfahren, wie z.B. automatisierte Galvanik, aus.

Eine gezielte Verbesserung für einzelne Oberflächen kann durch eine ideale Positionierung des Bauteils im Bauraum erzielt werden, indem beispielsweise die Oberfläche im Bereich höchster Auflösung des Druckers angeordnet wird.

In diesem Zusammenhang beschreibt EP 2 960 031 B1 ein Verfahren zum Herstellen einer Reifenvulkanisierform durch Montieren einer Musterform, die durch Rapid Prototyping auf einer Metallbasisform hergestellt wurde. Bei dem Verfahren wird die Musterform aus einem Metall auf Basis einer Ausprägung einer Oberflächenschicht hergestellt. Die Oberflächenschicht beinhaltet eine Musterformungsoberfläche eines Basismodells der Reifenvulkanisierform. Stufeneffekte durch das Rapid Prototyping können durch eine geeignete Wahl der Schichtungsrichtung reduziert werden.

Da die Formelemente und Formsegmente jedoch eine Vielzahl von Freiformflächen aufweisen, welche der Form und dem Profil geschuldet individuell gestaltet und ausgerichtet sind, werden bei perfekter Ausrichtung einer Oberfläche die anderen Oberflächen in ungünstigere Bereiche gelegt, sodass diese einen verstärkten Stufeneffekt oder Auflösungsdefekt aufweisen.

Vor diesem Hintergrund beschreibt US 2017/0217113 A1 eine Prägeplatte, die ein Modell von Profilen eines Laufstreifens eines zu formenden Reifens darstellt. Die Prägeplatte besteht aus einem Prägeplattenkörper, der mit Rillen versehen ist, und aus einem an den Körper der Prägeplatte angesetzten Einsatz, der wenigstens eine der Flächen der Rillen des Körpers bedeckt. Der Einsatz weist wenigstens eine ebene, mit Texturen versehene Fläche auf. Die Texturen werden durch 3D-Druck oder Laserbearbeitung oder mithilfe von Stempeln oder durch selektives Schmelzen von Metallpulver oder durch Elektroerosion hergestellt. Der Einsatz kann aus mehreren Elementen zusammengesetzt sein, um eine L-Form oder eine U-Form zu bilden.

Es ist eine Aufgabe der vorliegenden Erfindung, Lösungen für einen 3D-Druck von Reifenformelementen aufzuzeigen, die das Herstellen von Reifenformelementen mit einer 3D-Druckvorrichtung ermöglichen, ohne dass eine komplexe und kostenintensive Nachbearbeitung der gedruckten Reifenformelemente erforderlich ist.

Diese Aufgabe wird durch ein Reifenformelement mit den Merkmalen des Anspruchs 1, durch ein Verfahren mit den Merkmalen des Anspruchs 11, durch ein Computerprogramm mit Instruktionen mit den Merkmalen des Anspruchs 12 und durch eine Vorrichtung mit den Merkmalen des Anspruchs 13 gelöst. Bevorzugte Ausgestaltungen der Erfindung sind Gegenstand der abhängigen Ansprüche.

Gemäß einem ersten Aspekt der Erfindung weist ein Reifenformelement zur Verwendung in einer Reifenform einen Aufbau aus zweidimensionalen Schichten und zumindest eine Oberfläche mit einer Struktur mit einer Vielzahl von Strukturelementen auf. Durch die Struktur werden Stufeneffekte kaschiert, die durch den Aufbau aus zweidimensionalen Schichten bedingt sind.

Gemäß einem weiteren Aspekt der Erfindung umfasst ein Verfahren zum Herstellen eines Reifenformelements mit einer 3D-Druckvorrichtung die Schritte:
- Auswählen eines 3D-Modells für das Reifenformelement;
- Auswählen zumindest einer zu druckenden Oberfläche in dem 3D-Modell;
- Anordnen einer Struktur mit einer Vielzahl von Strukturelementen auf der zumindest einen zu druckenden Oberfläche, durch die Stufeneffekte eines aus dem Druckverfahren der 3D-Druckvorrichtung resultierenden Aufbaus des Reifenformelements aus zweidimensionalen Schichten kaschiert werden;
- Berechnen von Steuerungsdaten für die 3D-Druckvorrichtung für die zumindest eine mit der Struktur versehene zu druckende Oberfläche;
- Drucken des Reifenformelements mit der 3D-Druckvorrichtung auf Grundlage der Steuerungsdaten.

Gemäß einem weiteren Aspekt der Erfindung umfasst ein Computerprogramm Instruktionen, die bei Ausführung durch einen Computer den Computer zur Ausführung der folgenden Schritte zum Herstellen eines Reifenformelements mit einer 3D-Druckvorrichtung veranlassen:
- Auswählen eines 3D-Modells für das Reifenformelement;
- Auswählen zumindest einer zu druckenden Oberfläche in dem 3D-Modell;
- Anordnen einer Struktur mit einer Vielzahl von Strukturelementen auf der zumindest einen zu druckenden Oberfläche, durch die Stufeneffekte eines aus dem Druckverfahren der 3D-Druckvorrichtung resultierenden Aufbaus des Reifenformelements aus zweidimensionalen Schichten kaschiert werden;
- Berechnen von Steuerungsdaten für die 3D-Druckvorrichtung für die zumindest eine mit der Struktur versehene zu druckende Oberfläche;
- Drucken des Reifenformelements mit der 3D-Druckvorrichtung auf Grundlage der Steuerungsdaten.

Der Begriff Computer ist dabei breit zu verstehen. Insbesondere umfasst er auch Workstations, Mikrocontroller und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung hat eine Vorrichtung zum Herstellen eines Reifenformelements mit einer 3D-Druckvorrichtung:
- ein Auswahlmodul zum Auswählen eines 3D-Modells für das Reifenformelement und zum Auswählen zumindest einer zu druckenden Oberfläche in dem 3D-Modell;
- ein Rechenmodul zum Anordnen einer Struktur mit einer Vielzahl von Strukturelementen auf der zumindest einen zu druckenden Oberfläche, durch die Stufeneffekte eines aus dem Druckverfahren der 3D-Druckvorrichtung resultierenden Aufbaus des Reifenformelements aus zweidimensionalen Schichten kaschiert werden, und zum Berechnen von Steuerungsdaten für die 3D-Druckvorrichtung für die zumindest eine mit der Struktur versehene zu druckende Oberfläche; und
- ein Steuerungsmodul zum Ansteuern einer Steuerungseinheit der 3D-Druckvorrichtung zum Drucken des Reifenformelements auf Grundlage der Steuerungsdaten.

Bei der erfindungsgemäßen Lösung werden zu druckende Oberflächen eines Reifenformelements mit einer definierten Oberflächenstruktur versehen, wenn sie andernfalls aus dem Druckverfahren resultierende als störend empfundene Stufen aufweisen würden. Da die Orientierung der Oberflächen im Bauraum des Druckers die individuell vorherrschende Auflösung des Druckprozesses bestimmt, kann die Oberflächenstruktur abhängig von der Geometrie und Ausrichtung der jeweiligen zu druckenden Oberfläche im Bauraum festgelegt werden. Die Oberflächenstruktur ist dabei so gewählt, dass die aus dem 3D-Druckverfahren resultierenden Stufen kaschiert werden, d.h. nicht mehr störend in Erscheinung treten. Für die Struktur selberstehen vielfältige Ausgestaltungsmöglichkeiten zur Verfügung.

Anders ausgedrückt werden Oberflächen, welche aufgrund von Gestalt und Lage im Druckprozess starke Stufen aufweisen, mit einer Struktur versehen. Die jeweilige Struktur überlagert die Stufen und reduziert die Wahrnehmbarkeit der Stufen soweit, dass für einen Betrachter keine störenden Stufen in den betreffenden Bereichen wahrnehmbar sind. Wann Stufen als störend empfunden werden, liegt dabei im Ermessen des Fachmanns. Geeignete Ausgestaltungen können beispielsweise mittels einer Befragung von Testpersonen bestimmt werden, denen Oberflächen mit unterschiedlichen Strukturen vorgelegt werden.

Die Nutzung der erfindungsgemäßen Lösung für Reifenformelemente hat den Vorteil, dass bei einem erheblich reduzierten Aufwand für die Nachbearbeitung Reifenformen mit besonderen Merkmalen hergestellt werden können.

Gemäß einem Aspekt der Erfindung liegt eine Größenordnung der Struktur im Bereich einer minimalen Auflösung der 3D-Druckvorrichtung. Bei dieser Ausführungsform wird die Struktur so klein gewählt, dass die Stufen für einen Betrachter mit einer definierten Rauheit überlagert werden. Die definierte Rauheit erzeugt im Gegensatz zu definierten Stufen unterschiedlicher Breite ein einheitliches Erscheinungsbild, welches erwünscht sein kann. Alternativ kann durch das Abtragen der definierten und gleichmäßig verteilten Rauheitsspitzen mit standardisierten Parametern einfach und schnell ein homogenes Oberflächenerscheinungsbild erzielt werden.

Gemäß einem Aspekt der Erfindung beträgt eine Größenordnung der Struktur ein Vielfaches einer minimalen Auflösung der 3D-Druckvorrichtung. Bei dieser Ausführungsform wird die Struktur vielfach größer als die individuell vorherrschende minimale Auflösung des Druckprozesses gewählt und eine sichtbare Textur eingestellt. Die die Stufen überlagernde Struktur dient in diesem Fall als sichtbares Merkmal und wird nicht entfernt.

Der Übergang zwischen einer als rau wahrgenommenen Oberfläche und einer strukturierten Oberfläche ist fließend und ergibt sich aus der Auflösung des Druckprozesses und dem Auge sowie Abstand des Betrachters.

Gemäß einem Aspekt der Erfindung weisen die Strukturelemente eine Form auf, die durch Extrusion einer Grundkörperfläche entlang eines Vektors in einen Punkt oder in eine zu dem Vektor orthogonale Linie definiert ist. Beispiele für derartige Formen sind Pyramiden, Kegel oder Prismen. Dabei sorgt die geometrische Form dafür, dass für einen Betrachter der Eindruck entsteht, dass die Strukturelemente bewusst vorhanden sind. Zugleich wird erreicht, dass anstelle relativ breiter aus dem Druckvorgang resultierender Stufen eine größere Anzahl verhältnismäßig kleiner Stufen vorliegt. Dabei ist es vorteilhaft, wenn durch die Strukturelemente definierte Mantelflächen Steigungen in Bezug auf die Schichten aufweisen, die jeweils größer oder gleich 35° sind. Ebenfalls ist es vorteilhaft, wenn eine Höhe der Strukturelemente relativ zur Oberfläche jeweils mindestens die dreifache Schichtstärke der Schichten ist.

Gemäß einem Aspekt der Erfindung sind die Strukturelemente aus in einem Raster angeordneten und parallel zu den Schichten ausgerichteten Grundkörperflächen und senkrecht zu den Schichten ausgerichteten Wandflächen gebildet. Die Anordnung Im Raster vermittelt bzw. verstärkt wiederum den Eindruck, dass die Struktur bewusst vorhanden ist. Bei dieser Ausführungsform der Erfindung werden die aus dem Druckvorgang resultierenden Stufen in den an die Grundkörperflächen angrenzenden Wandflächen versteckt. Sie werden daher als notwendiger Teil der Oberflächenstruktur wahrgenommen. Damit eine hochwertige regelmäßige Struktur ausgebildet werden kann, ist die Fläche einer Grundkörperfläche vorzugsweise größer oder gleich 0,04 mm² ist. Dies entspricht in etwa der doppelten Fläche des Laserfokus heutiger Anlagen für den 3D-Metalldruck. Vorzugsweise weisen die Grundkörperflächen eine Rauheit im Bereich von Sa=2-15 µm auf (Sa: mittlere arithmetische Höhe).

Gemäß einem weiteren Aspekt der Erfindung ist eine 3D-Druckvorrichtung eingerichtet, ein erfindungsgemäßes Verfahren zum Herstellen eines Reifenformelements auszuführen. Beispielsweise kann die 3D-Druckvorrichtung eine 3D-Metalldrucktechnologie verwenden. Derartige Metalldrucktechnologien sind besonders gut geeignet für Bauteile, die eine hohe Stabilität aufweisen müssen, z.B. Bauteile für Formwerkzeuge. Beispiele für Metalldrucktechnologien sind unter anderem selektives Laserschmelzen, Elektronenstrahlschmelzen, selektives Lasersintern, Laserauftragschweißen (meist als Laser Metal Deposition bezeichnet), etc. Aufgrund physikalischer Grenzen der 3D-Metalldrucktechnologien liegt eine untere Grenze der Schichthöhe im Bereich von ca. 10 µm bis 30 µm.

Vorteilhafterweise wird ein erfindungsgemäßes Reifenformelement für eine Reifenform genutzt, um eine Struktur in zumindest eine Fläche eines Reifen einzubringen. Die eingebrachte Struktur hat dabei den Vorteil, dass je nach Größe der Struktur ein einheitliches Erscheinungsbild der strukturierten Fläche oder eine sich über die strukturierte Fläche erstreckende sichtbare Textur erzielt wird.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch eine Annäherung einer realen Geometrie durch Schichten mit konstanter Höhe;
- Fig. 2: zeigt schematisch ein Verfahren zum Herstellen eines Reifenformelements mit einer 3D-Druckvorrichtung;
- Fig. 3: zeigt eine erste Ausführungsform einer Vorrichtung zum Herstellen eines Reifenformelements mit einer 3D-Druckvorrichtung;
- Fig. 4: zeigt eine zweite Ausführungsform einer Vorrichtung zum Herstellen eines Reifenformelements mit einer 3D-Druckvorrichtung;
- Fig. 5: zeigt schematisch eine 3D-Druckvorrichtung, in der eine erfindungsgemäße Lösung verwendet wird;
- Fig. 6: zeigt schematisch die Anordnung einer Struktur auf einer zu druckenden Oberfläche;
- Fig. 7: zeigt schematisch Strukturen unterschiedlicher Größe auf einer zu druckenden Oberfläche;
- Fig. 8: zeigt ein zu druckendes Reifenformelement mit einer Freiformfläche sowie die Annäherung des Reifenformelements durch Schichten mit konstanter Höhe;
- Fig. 9: zeigt das Reifenformelement aus Fig. 8, nachdem eine Struktur auf der Freiformfläche angeordnet wurde;
- Fig. 10: veranschaulicht beispielhafte Strukturelemente, die auf der einer zu druckenden Oberfläche angeordnet werden können;
- Fig. 11: zeigt ein weiteres zu druckendes Reifenformelement mit einer Freiformfläche, bei dem die Freiformfläche eine Hexagon-Struktur aufweist; und
- Fig. 12: zeigt einen vergrößerten Ausschnitt der Hexagon-Struktur aus Fig. 11.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

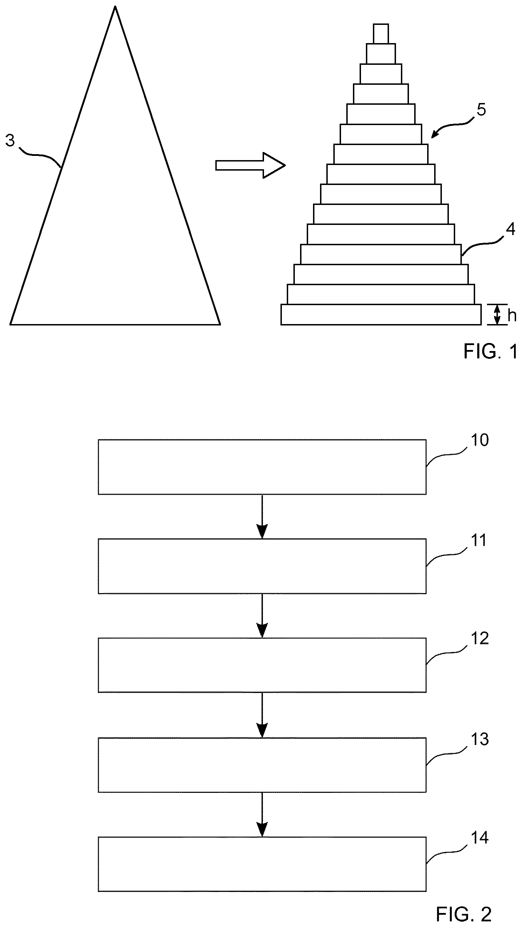

Fig. 1 zeigt schematisch eine Annäherung einer realen Geometrie 3 durch Schichten 4 mit konstanter Höhe h. Für den 3D-Druckprozess werden die realen dreidimensionalen Geometrien 3 durch Schichten 4 mit konstanter Höhe h angenähert. Mit dieser Annäherung geht ein Übersetzungsfehler in Form eines Genauigkeitsverlustes einher. Dieser führt zu Stufen 5, die von der Orientierung des Bauteils im Bauraum des Druckers abhängen. Die sichtbaren Stufeneffekte sowie auch andere in der Auflösung des Druckers und den gewählten Parametern begründete Oberflächendefekte treten insbesondere auf größeren zusammenhängenden Freiformflächen deutlich in Erscheinung. Sie sind in der Regel in sichtbaren Bereichen unerwünscht und müssen durch Nachbearbeitung entfernt werden.

Fig. 2 zeigt schematisch ein Verfahren zum Herstellen eines Reifenformelements mit einer 3D-Druckvorrichtung. Die 3D-Druckvorrichtung kann beispielsweise eine 3D-Metalldrucktechnologie verwenden. In einem ersten Schritt wird ein 3D-Modell für das Reifenformelement ausgewählt 10. Anschließend wird zumindest eine zu druckende Oberfläche in dem 3D-Modell des zu druckenden Reifenformelements ausgewählt 11. Auf der zumindest einen zu druckenden Oberfläche wird dann eine Struktur mit einer Vielzahl von Strukturelementen angeordnet 12. Die Struktur ist dabei so gewählt, dass Stufeneffekte eines aus dem Druckverfahren der 3D-Druckvorrichtung resultierenden Aufbaus des Reifenformelements aus zweidimensionalen Schichten kaschiert werden. Für die zumindest eine mit der Struktur versehene zu druckende Oberfläche werden im Anschluss Steuerungsdaten für die 3D-Druckvorrichtung berechnet 13. Auf Grundlage der Steuerungsdaten wird das Reifenformelement schließlich mit der 3D-Druckvorrichtung gedruckt 14.

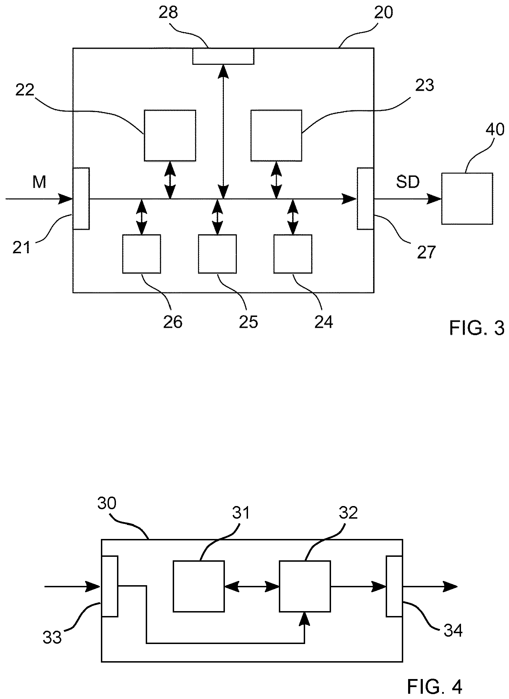

Fig. 3 zeigt eine vereinfachte schematische Darstellung einer ersten Ausführungsform einer Vorrichtung 20 zum Herstellen eines Reifenformelements mit einer 3D-Druckvorrichtung 40. Die Vorrichtung 20 hat einen Eingang 21, über den beispielsweise 3D-Modelle M zu druckender Reifenformelemente empfangen werden können. Mittels eines Auswahlmoduls 22 wird zumindest eine zu druckende Oberfläche in einem 3D-Modell M eines zu druckenden Reifenformelements ausgewählt. Ein Rechenmodul 23 ist eingerichtet, eine Struktur mit einer Vielzahl von Strukturelementen auf der zumindest einen zu druckenden Oberfläche anzuordnen. Die Struktur ist dabei so gewählt, dass Stufeneffekte eines aus dem Druckverfahren der 3D-Druckvorrichtung 40 resultierenden Aufbaus des Reifenformelements aus zweidimensionalen Schichten kaschiert werden. Das Rechenmodul 23 ist zudem eingerichtet, für die zumindest eine mit der Struktur versehene zu druckende Oberfläche Steuerungsdaten SD für die 3D-Druckvorrichtung zu berechnen. Die resultierenden Steuerungsdaten SD können von einem Steuerungsmodul 24 zum Ansteuern einer Steuerungseinheit der 3D-Druckvorrichtung 40 zum Drucken des Reifenformelements auf Grundlage der Steuerungsdaten genutzt werden. Die Steuerungsdaten SD können dazu über einen Ausgang 27 der Vorrichtung 20 an die 3D-Druckvorrichtung 40 ausgegeben werden.

Das Auswahlmodul 22, das Rechenmodul 23 und das Steuerungsmodul 24 können von einem Kontrollmodul 25 gesteuert werden. Über eine Benutzerschnittstelle 28 können gegebenenfalls Einstellungen des Auswahlmoduls 22, des Rechenmoduls 23, des Steuerungsmoduls 24 oder des Kontrollmoduls 25 geändert werden. Die in der Vorrichtung 20 anfallenden Daten können bei Bedarf in einem Speicher 26 abgelegt werden, beispielsweise für eine spätere Auswertung oder für eine Nutzung durch die Komponenten der Vorrichtung 20. Der Eingang 21 und der Ausgang 27 können zu einer bidirektionalen Schnittstelle zusammengefasst sein. Das Auswahlmodul 22, das Rechenmodul 23, das Steuerungsmodul 24 sowie das Kontrollmodul 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU (GPU: Graphics Processing Unit; Grafikprozessor) oder einer CPU (CPU: Central Processing Unit; zentrale Verarbeitungseinheit).

Fig. 4 zeigt eine vereinfachte schematische Darstellung einer zweiten Ausführungsform einer Vorrichtung 30 zum Herstellen eines Reifenformelements mit einer 3D-Druckvorrichtung. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von 3D-Modellen zu druckender Reifenformelemente. Vom Prozessor 32 generierte Daten werden über einen Ausgang 34 bereitgestellt. Darüber hinaus können sie im Speicher 31 abgelegt werden. Im Speicher 31 können zudem Messdaten oder Berechnungsergebnisse abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

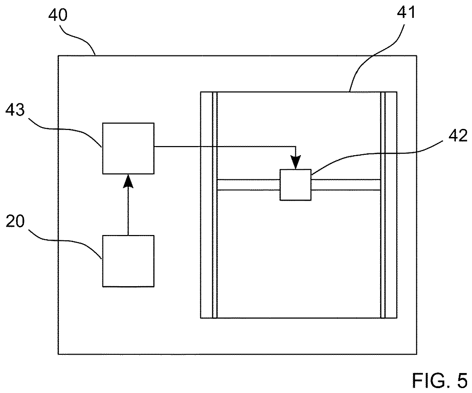

Fig. 5 zeigt schematisch eine 3D-Druckvorrichtung 40, in der eine erfindungsgemäße Lösung verwendet wird. Die 3D-Druckvorrichtung 40 weist einen Bauraum 41 auf, in dem ein 3D-Druckmodul 42 unter Verwendung einer 3D-Drucktechnologie Reifenformelemente drucken kann. Das 3D-Druckmodul 42 wird von einer Steuerungseinheit 43 gesteuert. Die Steuerungseinheit 43 greift dazu auf Steuerungsdaten SD einer erfindungsgemäßen Vorrichtung 20 zurück. Bei den Steuerungsdaten SD kann es sich beispielsweise unmittelbar um 3D-Druckdaten handeln, die dann von der Steuerungseinheit 43 für die Steuerung des 3D-Druckmoduls 42 genutzt werden. Alternativ kann es sich bei den Steuerungsdaten um ein angepasstes 3D-Modell des zu druckenden Reifenformelements handeln, aus dem die Steuerungseinheit 43 dann die erforderlichen 3D-Druckdaten für die Steuerung des 3D-Druckmoduls 42 ermittelt.

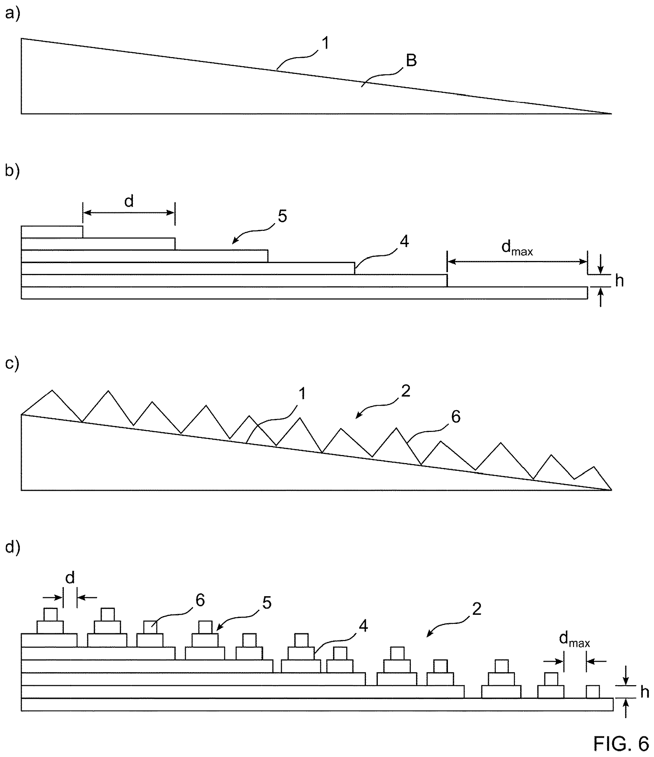

Fig. 6 zeigt schematisch die Anordnung einer Struktur 2 mit einer Vielzahl von Strukturelementen 6 auf einer zu druckenden Oberfläche 1. In Fig. 6a) ist ein Schnitt durch ein einfaches Bauteil B zu sehen. Die reale Geometrie weist eine geringe Steigung auf. Wird das Bauteil B nun durch Schichten 4 konstanter Höhe h angenähert, so entstehen in Abhängigkeit von der Höhe h der Schichten 4, d.h. der Schichtdicke, Stufen 5 mit einer großen Stufenbreite d. Die resultierende Annäherung ist in Fig. 6b) dargestellt. Wie gut zu sehen ist, kommt es zu einer großen maximalen auftretenden Stufenbreite dₘₐₓ.

Um das Auftreten großer Stufenbreiten zu verhindern, wird eine Struktur 2 mit einer Vielzahl von Strukturelementen 6 auf der Oberfläche 1 angeordnet. Dies ist in Fig. 6c) dargestellt. Die Struktur 2 kann dabei regelmäßig ausgestaltet sein oder unregelmäßig, wie es im dargestellten Beispiel der Fall ist. Wird die Oberfläche 1 mit der darauf angeordneten Struktur 2 nun durch Schichten 4 konstanter Höhe h angenähert, so ergibt sich die in Fig. 6d) gezeigte Situation. Es ist deutlich zu sehen, dass bei gleicher Stufenhöhe h die größte auftretende Stufenbreite dₘₐₓ deutlich reduziert ist. Für einen Betrachter sind die Stufen 5 nicht mehr störend wahrnehmbar.

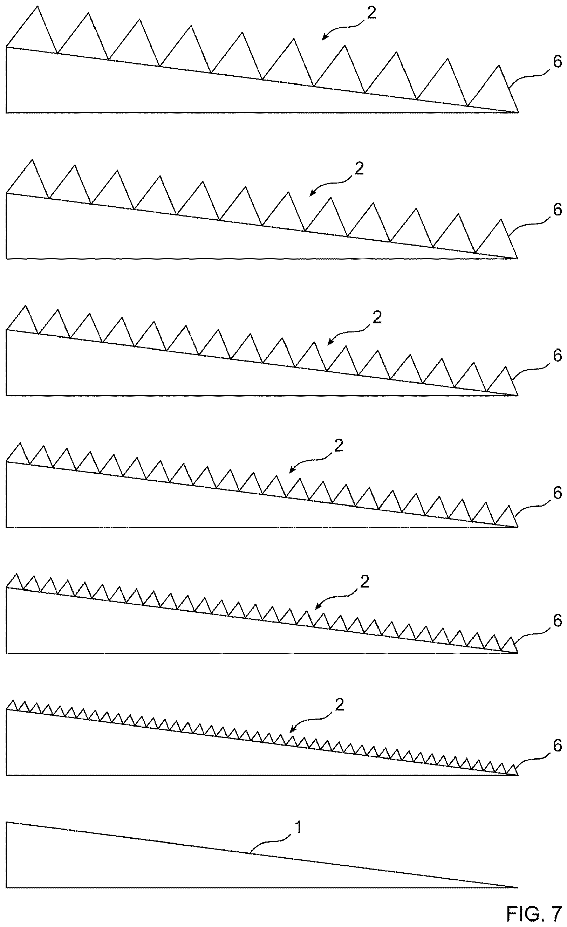

Fig. 7 zeigt schematisch Strukturen 2 mit Strukturelementen 6 unterschiedlicher Größe auf einer zu druckenden Oberfläche 1. Die Struktur 2 selber kann in ihrer Größe und Gestalt beliebig gewählt werden. Bei sehr kleinen Strukturelementen 6 liegt die Größenordnung der Struktur 2 im Bereich einer minimalen Auflösung der 3D-Druckvorrichtung. Die Stufen wirken in diesem Fall für einen Betrachter so, als würden sie eine definierte Rauheit aufweisen. Die definierte Rauheit erzeugt im Gegensatz zu definierten Stufen unterschiedlicher Breite ein einheitliches Erscheinungsbild, welches erwünscht sein kann. Alternativ kann durch das Abtragen der definierten und gleichmäßig verteilten Rauheitsspitzen mit standardisierten Parametern einfach und schnell ein homogenes Oberflächenerscheinungsbild erzielt werden.

Im Falle von sehr großen Strukturelementen 6 beträgt die Größenordnung der Struktur 2 ein Vielfaches der minimalen Auflösung der 3D-Druckvorrichtung. Bei dieser Ausführungsform wird eine sichtbare Textur erzielt. Die die Stufen überlagernde Struktur 2 dient in diesem Fall als gewünschtes sichtbares Merkmal und wird nicht entfernt.

Der Übergang zwischen einer als rau wahrgenommenen Oberfläche und einer strukturierten Oberfläche ist fließend und ergibt sich aus der Auflösung des Druckprozesses und dem Auge sowie Abstand des Betrachters.

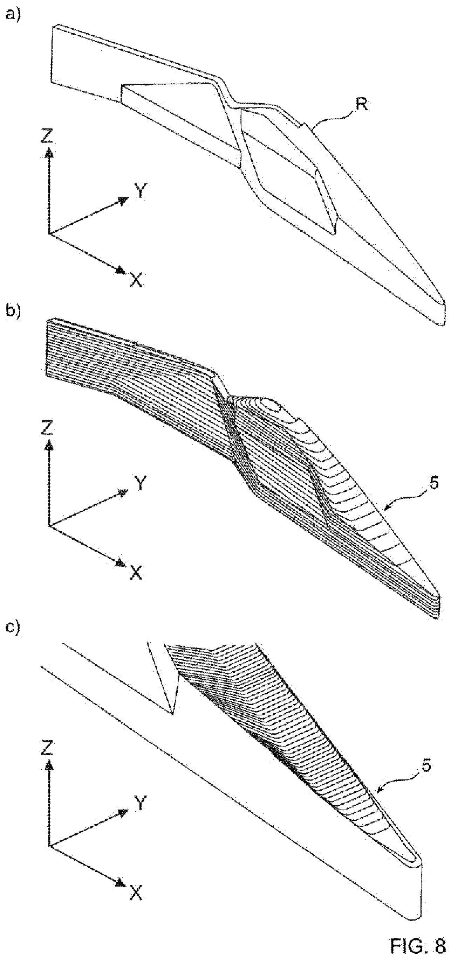

Fig. 8 zeigt ein 3D-Modell eines zu druckenden Reifenformelements R mit einer Freiformfläche sowie die Annäherung des Reifenformelements R durch Schichten mit konstanter Höhe. In Fig. 8a) ist das ursprüngliche 3D-Modell zu sehen. Fig. 8b) zeigt eine Annäherung des 3D-Modells durch Schichten mit einer Schichtdicke von 300 µm. Die Aufbaurichtung der Schichten ist dabei entlang der Z-Achse. Fig. 8c) zeigt eine Annäherung des 3D-Modells durch Schichten mit einer Schichtdicke von 30 µm. Die Aufbaurichtung der Schichten ist dabei wiederum entlang der Z-Achse. Für eine bessere Erkennbarkeit zeigt Fig. 8c) einen vergrößerten Ausschnitt des Reifenformelements R. Es ist deutlich zu erkennen, dass für beide Schichtdicken deutlich sichtbare Stufen 5 auftreten.

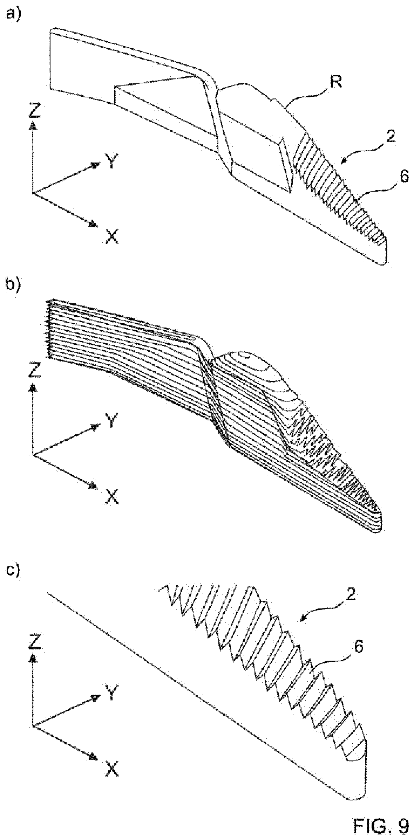

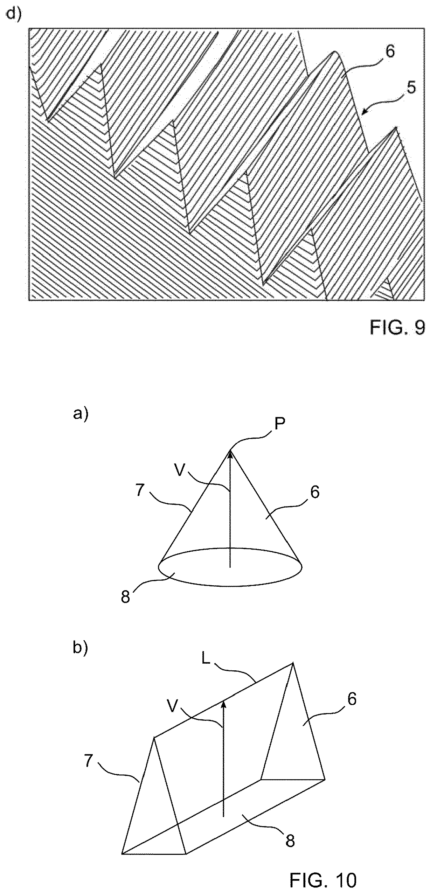

Fig. 9 zeigt das 3D-Modell M des Reifenformelements R aus Fig. 8, nachdem eine Struktur 2 mit einer Vielzahl von Strukturelementen 6 auf der Freiformfläche angeordnet wurde. In Fig. 9a) ist das ursprüngliche 3D-Modell zu sehen. Fig. 9b) zeigt eine Annäherung des 3D-Modells durch Schichten mit einer Schichtdicke von 300 µm. Die Aufbaurichtung der Schichten ist dabei entlang der Z-Achse. Fig. 9c) zeigt eine Annäherung des 3D-Modells durch Schichten mit einer Schichtdicke von 30 µm. Die Aufbaurichtung der Schichten ist dabei wiederum entlang der Z-Achse. Für eine bessere Erkennbarkeit zeigt Fig. 9c) einen vergrößerten Ausschnitt des Reifenformelements R. Fig. 9d) zeigt einen nochmals vergrößerten Ausschnitt von Fig. 9c). Es ist deutlich zu sehen, dass durch die Struktur 2 die Stufenbreiten soweit verringert wurden, dass für einen Betrachter keine Stufen mehr sichtbar sind. Erst im Detailausschnitt in Fig. 9d) werden Stufen 5 erkennbar.

Fig. 10 veranschaulicht beispielhafte Strukturelemente 6, die auf einer zu druckenden Oberfläche angeordnet werden können. Die Strukturelemente 6 weisen eine Form auf, die durch Extrusion einer Grundkörperfläche 8 entlang eines Vektors V in einen Punkt P oder in eine zu dem Vektor V orthogonale Linie L definiert ist. Der Vektor V kann dabei senkrecht auf der Grundkörperfläche 8 stehen, kann aber auch gegenüber der Grundkörperfläche 8 geneigt sein. Durch die Extrusion wird aus der Grundkörperfläche 8 ein Körper mit einer Mantelfläche 7. Die Steigung dieser Mantelfläche 7 in Bezug auf die Grundkörperfläche 8 ist dabei vorzugsweise größer oder gleich 35°. Die Länge des Extrusionsvektors ist vorzugsweise mindestens die dreifache Schichtstärke der Schichten. Bei dem Beispiel in Fig. 10a) hat das Strukturelement 6 die Form eines Kegels, beim Beispiel in Fig. 10b) die Form eines Prismas. Bei den Grundkörperflächen 8 kann es sich beispielsweise um Kreise, Ovale oder regelmäßige oder unregelmäßige Vielecke handeln. Die Mindestgröße der Grundkörperflächen 8 sollte vorzugsweise im Bereich der doppelten Fläche des Laserfokus der zur Herstellung verwendeten 3D-Druckvorrichtung liegen, d.h. beispielsweise im Bereich von 0,04 mm².

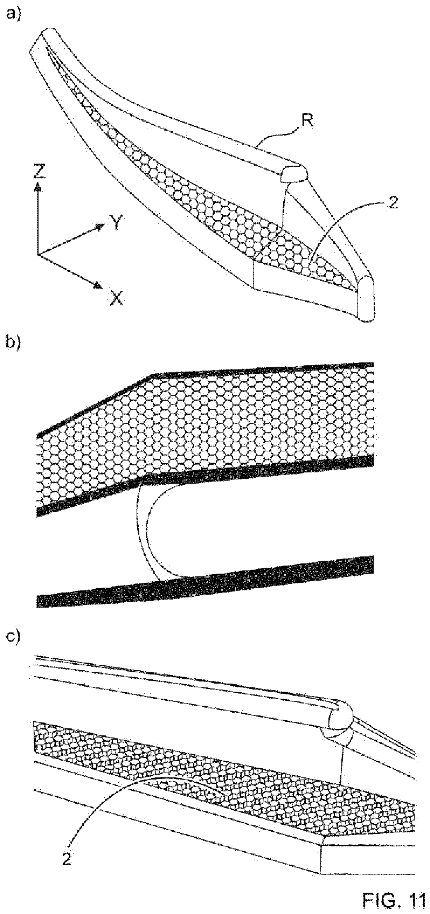

Fig. 11 zeigt ein weiteres 3D-Modell eines zu druckenden Reifenformelements R mit einer Freiformfläche, bei dem die Freiformfläche eine Hexagon-Struktur 2 aufweist. Die Aufbaurichtung des Druckverfahrens ist entlang der Z-Achse. In Fig. 11a) ist das gesamte Reifenformelement R gezeigt. Fig. 11b) zeigt einen vergrößerten Ausschnitt einer Draufsicht auf das Reifenformelement R. Fig. 11c) zeigt einen vergrößerten Ausschnitt einer Schrägansicht des Reifenformelements R. Die Hexagon-Struktur ist so ausgestaltet, dass die jeweiligen entstehenden Terrassen stets planar in der Aufbauebene liegen. Die Krümmung der Freiformfläche wird also durch Stufen angenähert. Die Ebene einer jeden Stufe bzw. Terrasse ist parallel zur Aufbauebene des Druckverfahrens. Dadurch wird die Freiformfläche hoch aufgelöst.

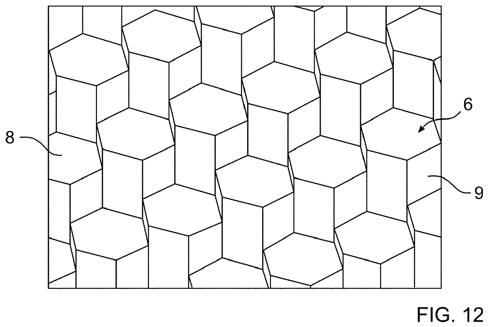

Fig. 12 zeigt einen vergrößerten Ausschnitt der Hexagon-Struktur aus Fig. 11. Die Strukturelemente 6 werden in diesem Fall aus in einem Raster angeordneten und parallel zu den Schichten ausgerichteten Grundkörperflächen 8 und senkrecht zu den Schichten ausgerichteten Wandflächen 9 gebildet. Die Strukturelemente 6 bilden somit eine Vielzahl von Terrassen. Bei den Grundkörperflächen 8 kann es sich wiederum um Kreise, Ovale oder regelmäßige oder unregelmäßige Vielecke handeln. Die Formen können dabei symmetrisch oder unsymmetrisch sein. Die Mindestgröße der Grundkörperflächen 8 sollte vorzugsweise im Bereich der doppelten Fläche des Laserfokus der zur Herstellung verwendeten 3D-Druckvorrichtung liegen, d.h. beispielsweise im Bereich von 0,04 mm². Selbstverständlich können Strukturelemente 6 unterschiedlicher Größe kombiniert werden. Die Terrassen können zusätzlich eine Rauheit aufweisen, vorzugsweise im Bereich von Sa=2-15 µm.

### Bezugszeichenliste

- 1: Zu druckende Oberfläche
- 2: Struktur
- 3: Reale Geometrie
- 4: Schicht
- 5: Stufe
- 6: Strukturelement
- 7: Mantelfläche
- 8: Grundkörperfläche
- 9: Wandfläche
- 10: Auswählen eines 3D-Modells für ein zu druckendes Reifenformelement
- 11: Auswählen einer zu druckenden Oberfläche
- 12: Anordnen einer Struktur auf der zu druckenden Oberfläche
- 13: Berechnen von Steuerungsdaten für eine 3D-Druckvorrichtung
- 14: Drucken des Reifenformelements mit der 3D-Druckvorrichtung
- 20: Vorrichtung
- 21: Eingang
- 22: Auswahlmodul
- 23: Rechenmodul
- 24: Steuerungsmodul
- 25: Kontrollmodul
- 26: Speicher
- 27: Ausgang
- 28: Benutzerschnittstelle
- 30: Vorrichtung
- 31: Speicher
- 32: Prozessor
- 33: Eingang
- 34: Ausgang
- 40: 3D-Druckvorrichtung
- 41: Bauraum
- 42: 3D-Druckmodul
- 43: Steuerungseinheit
- B: Bauteil
- d: Stufenbreite
- dₘₐₓ: Maximale Stufenbreite
- h: Stufenhöhe
- L: Linie
- M: 3D-Modell
- P: Punkt
- R: Reifenformelement
- SD: Steuerungsdaten
- V: Vektor

## Patentansprüche

1. Reifenformelement (R) zur Verwendung in einer Reifenform, wobei das Reifenformelement (R) einen Aufbau aus zweidimensionalen Schichten (4) und zumindest eine Oberfläche (1) mit einer Struktur (2) mit einer Vielzahl von Strukturelementen (6) aufweist, **dadurch gekennzeichnet, dass** durch die Struktur (2) Stufeneffekte kaschiert werden, die durch den Aufbau aus zweidimensionalen Schichten (4) bedingt sind.

2. Reifenformelement (R) gemäß Anspruch 1, wobei die Strukturelemente (6) eine Form aufweisen, die durch Extrusion einer Grundkörperfläche (8) entlang eines Vektors (V) in einen Punkt (P) oder in eine zu dem Vektor (V) orthogonale Linie (L) definiert ist.

3. Reifenformelement (R) gemäß Anspruch 2, wobei durch die Strukturelemente (6) definierte Mantelflächen (7) Steigungen in Bezug auf die Schichten (4) aufweisen, die jeweils größer oder gleich 35° sind.

4. Reifenformelement (R) gemäß Anspruch 2 oder 3, wobei eine Höhe der Strukturelemente (6) relativ zur Oberfläche (1) jeweils mindestens die dreifache Schichtstärke (h) der Schichten (4) ist.

5. Reifenformelement (R) gemäß Anspruch 1, wobei die Strukturelemente (6) aus in einem Raster angeordneten und parallel zu den Schichten (4) ausgerichteten Grundkörperflächen (8) und senkrecht zu den Schichten (4) ausgerichteten Wandflächen (9) gebildet sind.

6. Reifenformelement (R) gemäß Anspruch 5, wobei die Fläche einer Grundkörperfläche (8) größer oder gleich 0,04 mm² ist.

7. Reifenformelement (R) gemäß Anspruch 5 oder 6, wobei die Grundkörperflächen (8) eine Rauheit im Bereich von Sa=2-15 µm aufweisen, wobei Sa die mittlere arithmetische Höhe ist.

8. Reifenformelement (R) gemäß einem der Ansprüche 2 bis 7, wobei die Grundkörperflächen (8) jeweils einen Kreis, ein Oval oder ein Vieleck bilden.

9. Reifenform für einen Reifen für ein Kraftfahrzeug, wobei die Reifenform zumindest ein Reifenformelement (R) gemäß einem der Ansprüche 1 bis 8 aufweist.

10. Reifen für ein Kraftfahrzeug, mit zumindest einer mit einer Struktur versehenen Fläche, wobei die Struktur mit einem Reifenformelement (R) gemäß einem der Ansprüche 1 bis 8 in den Reifen eingebracht ist.

11. Verfahren zum Herstellen eines Reifenformelements (R) mit einer 3D-Druckvorrichtung (40), mit den Schritten:
- Auswählen (10) eines 3D-Modells (M) für das Reifenformelement (R);
- Auswählen (11) zumindest einer zu druckenden Oberfläche (1) in dem 3D-Modell (M);
- Anordnen (12) einer Struktur (2) mit einer Vielzahl von Strukturelementen (6) auf der zumindest einen zu druckenden Oberfläche (1), durch die Stufeneffekte eines aus dem Druckverfahren der 3D-Druckvorrichtung (40) resultierenden Aufbaus des Reifenformelements (R) aus zweidimensionalen Schichten (4) kaschiert werden;
- Berechnen (13) von Steuerungsdaten (SD) für die 3D-Druckvorrichtung (40) für die zumindest eine mit der Struktur (2) versehene zu druckende Oberfläche (1);
- Drucken (14) des Reifenformelements (R) mit der 3D-Druckvorrichtung (40) auf Grundlage der Steuerungsdaten (SD).

12. Computerprogramm mit Instruktionen, die bei Ausführung durch einen Computer den Computer zur Ausführung der Schritte eines Verfahrens gemäß Anspruch 11 zum Herstellen eines Reifenformelements (R) mit einer 3D-Druckvorrichtung (40) veranlassen.

13. Vorrichtung (20) zum Herstellen eines Reifenformelements (R) mit einer 3D-Druckvorrichtung (40), mit
- einem Auswahlmodul (22) zum Auswählen (10) eines 3D-Modells (M) für das Reifenformelement (R) und zum Auswählen (11) zumindest einer zu druckenden Oberfläche (1) in dem 3D-Modell (M);
- einem Rechenmodul (23) zum Anordnen (12) einer Struktur (2) mit einer Vielzahl von Strukturelementen (6) auf der zumindest einen zu druckenden Oberfläche (1), durch die Stufeneffekte eines aus dem Druckverfahren der 3D-Druckvorrichtung (40) resultierenden Aufbaus des Reifenformelements (R) aus zweidimensionalen Schichten (4) kaschiert werden, und zum Berechnen (13) von Steuerungsdaten (SD) für die 3D-Druckvorrichtung (40) für die zumindest eine mit der Struktur (2) versehene zu druckende Oberfläche (1); und
- einem Steuerungsmodul (24) zum Ansteuern einer Steuerungseinheit (43) der 3D-Druckvorrichtung (40) zum Drucken (14) des Reifenformelements (R) auf Grundlage der Steuerungsdaten (SD).

## Claims

1. Tyre moulding element (R) for use in a tyre mould, the tyre moulding element (R) having a construction made up of two-dimensional layers (4) and having at least one surface (1) with a structure (2) comprising a multiplicity of structural elements (6), **characterized in that** the structure (2) masks the step effects caused by the construction made up of two-dimensional layers (4).

2. Tyre moulding element (R) according to Claim 1, the structural elements (6) having a form which is defined by extrusion of a main body area (8) along a vector (V) into a point (P) or into a line (L) orthogonal to the vector (V).

3. Tyre moulding element (R) according to Claim 2, lateral surface areas (7) that are defined by the structural elements (6) having pitches with respect to the layers (4) that are in each case greater than or equal to 35°.

4. Tyre moulding element (R) according to Claim 2 or 3, a height of the structural elements (6) in relation to the surface (1) being in each case at least three times the layer thickness (h) of the layers (4).

5. Tyre moulding element (R) according to Claim 1, the structural elements (6) being formed by main body areas (8) arranged in a grid and aligned parallel to the layers (4) and wall areas (9) aligned perpendicularly to the layers (4).

6. Tyre moulding element (R) according to Claim 5, the surface area of a main body area (8) being greater than or equal to 0.04 mm².

7. Tyre moulding element (R) according to Claim 5 or 6, the main body areas (8) having a roughness in the range of Sa=2-15 µm, where Sa is the mean arithmetic height.

8. Tyre moulding element (R) according to one of Claims 2 to 7, the main body areas (8) respectively forming a circle, an oval or a polygon.

9. Tyre mould for a tyre for a motor vehicle, the tyre mould having at least one tyre moulding element (R) according to one of Claims 1 to 8.

10. Tyre for a motor vehicle, with at least one surface area provided with a structure, the structure being incorporated in the tyre by a tyre moulding element (R) according to one of Claims 1 to 8.

11. Method for producing a tyre moulding element (R) by a 3D printing device (40) with the steps of:
- selecting (10) a 3D model (M) for the tyre moulding element (R);
- selecting (11) at least one surface (1) to be printed in the 3D model (M);
- arranging (12) a structure (2) comprising a multiplicity of structural elements (6) on the at least one surface (1) to be printed, by which step effects of a construction of the tyre moulding element (R) made up of two-dimensional layers (4) resulting from the printing process of the 3D printing device (40) are masked;
- calculating (13) control data (SD) for the 3D printing device (40) for the at least one surface (1) to be printed that is provided with the structure (2);
- printing (14) the tyre moulding element (R) with the 3D printing device (40) on the basis of the control data (SD).

12. Computer program with instructions which, when performed by a computer, cause the computer to perform the steps of a method according to Claim 11 for producing a tyre moulding element (R) by a 3D printing device (40).

13. Device (20) for producing a tyre moulding element (R) by a 3D printing device (40), with
- a selecting module (22) for selecting (10) a 3D model (M) for the tyre moulding element (R) and for selecting (11) at least one surface (1) to be printed in the 3D model (M);
- a computing module (23) for arranging (12) a structure (2) comprising a multiplicity of structural elements (6) on the at least one surface (1) to be printed, by which step effects of the construction of the tyre moulding element (R) made up of two-dimensional layers (4) resulting from the printing process of the 3D printing device (40) are masked, and for calculating (13) control data (SD) for the 3D printing device (40) for the at least one surface (1) to be printed that is provided with the structure (2); and
- a controlling module (24) for activating a control unit (43) of the 3D printing device (40) for printing (14) the tyre moulding element (R) on the basis of the control data (SD).

## Revendications

1. Elément de moule pour pneu (R) destiné à être utilisé dans un moule pour pneu, l'élément de moule pour pneu (R) présentant une construction de couches bidimensionnelles (4) et au moins une surface (1) ayant une structure (2) pourvue d'une pluralité d'éléments structurels (6), **caractérisé en ce que** la structure (2) masque des effets d'escalier qui sont dus à la construction de couches bidimensionnels (4).

2. Elément de moule pour pneu (R) selon la revendication 1, dans lequel les éléments structurels (6) présentent une forme qui est définie par l'extrusion d'une surface de corps de base (8) le long d'un vecteur (V) pour former un point (P) ou une ligne (L) orthogonale au vecteur (V).

3. Elément de moule pour pneu (R) selon la revendication 2, dans lequel des surfaces latérales (7) définies par les éléments structurels (6) présentent des pentes par rapport aux couches (4) qui sont respectivement supérieures ou égales à 35°.

4. Elément de moule pour pneu (R) selon la revendication 2 ou 3, dans lequel une hauteur des éléments structurels (6) par rapport à la surface (1) est respectivement au moins trois fois l'épaisseur de couche (h) des couches (4).

5. Elément de moule pour pneu (R) selon la revendication 1, dans lequel les éléments structurels (6) sont formés par des surfaces de corps de base (8) disposées dans une grille et alignées en parallèle aux couches (4) et par des surfaces de paroi (9) alignées perpendiculairement aux couches (4).

6. Elément de moule pour pneu (R) selon la revendication 5, dans lequel la superficie d'une surface de corps de base (8) est supérieure ou égale à 0,04 mm².

7. Elément de moule pour pneu (R) selon la revendication 5 ou 6, dans lequel les surfaces de corps de base (8) présentent une rugosité dans la plage de Sa = 2 à 15 µm, Sa étant la hauteur arithmétique moyenne.

8. Elément de moule pour pneu (R) selon l'une quelconque des revendications 2 à 7, dans lequel les surfaces de corps de base (8) forment respectivement un cercle, un ovale ou un polygone.

9. Moule pour pneu destiné à un pneu pour un véhicule automobile, le moule pour pneu présentant au moins un élément de moule pour pneu (R) selon l'une quelconque des revendications 1 à 8.

10. Pneu pour un véhicule automobile, comprenant au moins une surface pourvue d'une structure, la structure étant introduite dans le pneu par un élément de moule pour pneu (R) selon l'une quelconque des revendications 1 à 8.

11. Procédé de fabrication d'un élément de moule pour pneu (R) à l'aide d'un dispositif d'impression 3D (40), comprenant les étapes consistant à :
- sélectionner (10) un modèle 3D (M) pour l'élément de moule pour pneu (R);
- sélectionner (11) au moins une surface (1) à imprimer dans le modèle 3D (M) ;
- disposer (12) une structure (2) pourvue d'une pluralité d'éléments structurels (6) sur ladite au moins une surface (1) à imprimer qui masque des effets d'escalier d'une construction de l'élément de moule pour pneu (R) à partir de couches bidimensionnelles (4) résultant du procédé d'impression du dispositif d'impression 3D (40) ;
- calculer (13) des données de commande (SD) pour le dispositif d'impression 3D (40) pour ladite au moins une surface (1) à imprimer, pourvue de la structure (2) ;
- imprimer (14) l'élément de moule pour pneu (R) à l'aide du dispositif d'impression 3D (40) sur la base des données de commande (SD).

12. Programme informatique comprenant des instructions qui, lorsqu'elles sont exécutées par un ordinateur, font que l'ordinateur exécute les étapes d'un procédé selon la revendication 11 pour fabriquer un élément de moule pour pneu (R) à l'aide d'un dispositif d'impression 3D (40).

13. Dispositif (20) de fabrication d'un élément de moule pour pneu (R) à l'aide d'un dispositif d'impression 3D (40), comprenant :
- un module de sélection (22) pour sélectionner (10) un modèle 3D (M) pour l'élément de moule pour pneu (R) et pour sélectionner (11) au moins une surface (1) à imprimer dans le modèle 3D (M) ;
- un module de calcul (23) pour disposer (12) une structure (2) pourvue d'une pluralité d'éléments structurels (6) sur ladite au moins une surface (1) à imprimer qui masque des effets d'escalier d'une construction de l'élément de moule pour pneu (R) à partir de couches bidimensionnelles (4) résultant du procédé d'impression du dispositif d'impression 3D (40), et pour calculer (13) des données de commande (SD) pour le dispositif d'impression 3D (40) pour ladite au moins une surface (1) à imprimer, pourvue de la structure (2) ; et
- un module de commande (24) pour piloter une unité de commande (43) du dispositif d'impression 3D (40) pour imprimer (14) l'élément de moule pour pneu (R) sur la base des données de commande (SD).
